Europäisches Patentamt

European Patent Office

Office européen des brevets

(11) Veröffentlichungsnummer: **0 019 655**
**B1**

(12) **EUROPÄISCHE PATENTSCHRIFT**

(45) Veröffentlichungstag der Patentschrift:
15.09.82

(21) Anmeldenummer: 79102988.7

(22) Anmeldetag: 16.08.79

(51) Int. Cl.³: **B 01 D 23/10,** C 02 F 3/04,
C 02 F 3/10, B 01 D 23/18,
E 04 G 15/04

(54) Vorrichtung zum vorübergehenden Fixieren von Verbindungselementen für Drainagerohre während des Einbetonierens in den Boden eines Filterfeldes.

(30) Priorität: 31.05.79 CH 5084/79

(43) Veröffentlichungstag der Anmeldung:
10.12.80 Patentblatt 80/25

(45) Bekanntmachung des Hinweises auf die Patenterteilung:
15.09.82 Patentblatt 82/37

(84) Benannte Vertragsstaaten:
AT DE FR GB IT NL

(56) Entgegenhaltungen:
FR-A-1 013 722
FR-A-1 405 568
GB-A-888 202
US-A-4 159 099

(73) Patentinhaber: GEBRÜDER SULZER
AKTIENGESELLSCHAFT, Zürcherstrasse 9,
CH-8401 Winterthur (CH)

(72) Erfinder: Tylmann, Josef, Brunngasse,
CH-8400 Winterthur (CH)

(74) Vertreter: Sparing, Nikolaus, Dipl.-Ing.,
Rethelstrasse 123, D-4000 Düsseldorf 1 (DE)

EP 0 019 655 B1

BUNDESDRUCKEREI BERLIN

## Vorrichtung zum vorübergehenden Fixieren von Verbindungselementen für Drainagerohre während des Einbetonierens in den Boden eines Filterfeldes

Die Erfindung betrifft eine Vorrichtung zum vorübergehenden Fixieren von Verbindungselementen während ihres Einbetonierens in den Boden eines Filterfeldes einer Filteranlage, insbesondere für die Wasseraufbereitung, wobei in dem Filterfeld als Durchgangsorgane für das gefilterte Medium Filterdüsen vorhanden sind, die in einer Anzahl Drainagerohre aufgereiht sind, die ihrerseits im Bereich des betonierten Bodens des Filterfeldes mindestens annähernd parallel zueinander angeordnet und über je ein Anschlußrohr mit einem, unter dem Filterboden verlegten Sammelkanal für das abzuführende Filtrat verbunden sind.

Für diese neuartige Montage der Drainagerohre am Boden eines Filterfeldes (EP-A-19 658) müssen in den Filterboden Verbindungselemente einbetoniert werden, durch die im Filterboden Durchtrittsöffnungen zu einem darunter liegenden Sammelkanal für das Reinwasser entstehen. In diese Durchtrittsöffnungen werden die den Boden des Filterbodens bedeckenden Drainagerohre, die werkstattmäßig vorgefertigt sind, mit Hilfe von an sie angesetzten Anschluß- oder Tauchrohren eingesteckt, nachdem der Filterboden fertiggestellt ist.

Um die Montage der vorgefertigten Drainagerohre zu ermöglichen, müssen die Verbindungselemente mit relativ großer Genauigkeit an vorbestimmten Stellen des fertigen Filterbodens angeordnet sein.

Aus der GB-PS 888 202 sind Mittel bekannt, mit denen Verankerungsbolzen für Leitungen in Betondecken verankert werden; diese Mittel bestehen in einer in den Beton eingegossenen konischen Büchse, in die ein ebenfalls konisch geformter Gegenkörper hineingezogen wird; der Verankerungsbolzen ist mit dem Gegenkörper verschraubt, der seinerseits in einen Zwischenkörper aus elastischem Material eingebettet ist. Hierbei handelt es sich nicht um eine vorübergehende Fixierung eines Schalungskörpers sondern um eine bleibende Befestigung des Muttergewindes für den Verankerungsbolzen.

Der vorliegenden Erfindung liegt die Aufgabe zugrunde, eine Vorrichtung zu schaffen, mit der ein vorübergehendes Fixieren der Verbindungselemente bei der Herstellung des Filterbodens auf einfache Weise ermöglicht wird. Diese Aufgabe wird gelöst durch einen auf die Deckenschalung des Sammelkanals aufgesetzten schlagfesten, domartigen Schalungskörper, der in Richtung des Sammelkanals verläuft und in einem Abstand der dem Abstand der zu verlegenden Drainagerohre entspricht, Tragbolzen für einen reversibel aufweitbaren Spreizkörper aufweist, ferner durch auf die Tragbolzen aufgesetzte Spreizkörper und durch von der Oberseite des Bodens betätigbare Mittel zur individuellen, reversiblen Aufweitung der einzelnen Spreizkörper.

Als Spreizkörper haben sich dabei tonnenartig geformte Elastomere bewährt, die durch in entsprechende Muttergewinde einschraubbare Schraubenbolzen in Achsrichtung zusammengepreßt werden.

Die erfindungsgemäße Vorrichtung gestattet eine genaue örtliche Festlegung der Verbindungselemente im Filterboden und insbesondere relativ zum Sammelkanal für das Reinwasser.

Da die im allgemeinen rotationssymmetrischen, d. h. im wesentlichen in ihrem Querschnitt kreisförmigen Verbindungselemente unter Umständen eine Vorzugsrichtung haben, ist es zweckmäßig, die richtige Lage dieser Vorzugsrichtung durch nockenartige Ansätze, die fluchtend hintereinander auf dem Schalungskörper zwischen dem Tragbolzen angeordnet sind, festzulegen. Die Steifigkeit des in Längsrichtung des Sammelkanals verlaufenden Schalungskörpers kann erhöht werden, wenn im Schalungskörper quer zu seiner Längsrichtung verlaufende Versteifungswände vorgesehen sind.

Im folgenden wird die Erfindung anhand eines Ausführungsbeispieles im Zusammenhang mit der Zeichnung näher erläutert.

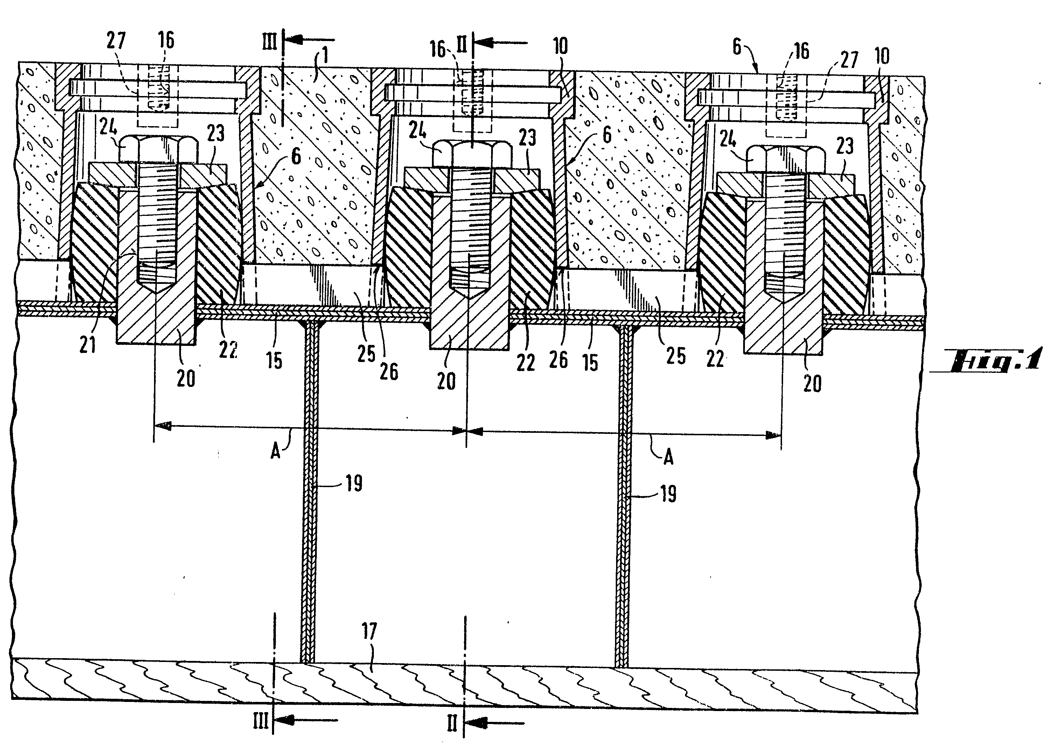

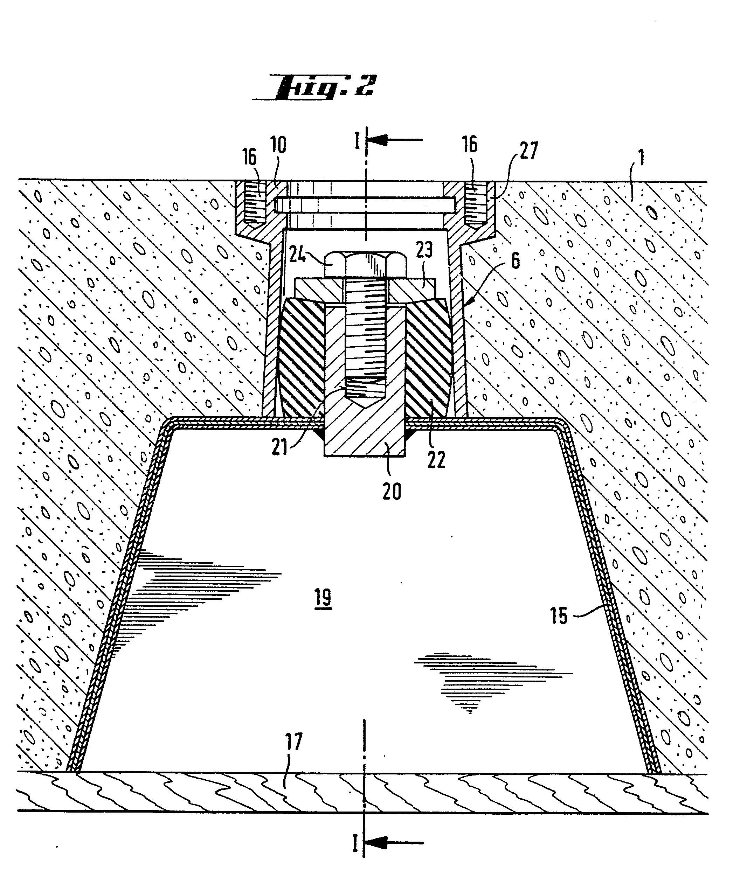

Fig. 1 zeigt einen Schnitt I-I von Fig. 2, der in Längsrichtung des zu betonierenden Sammelkanals bzw. des Schalungskörpers verläuft;

Fig. 2 ist der Schnitt II-II von Fig. 1, während

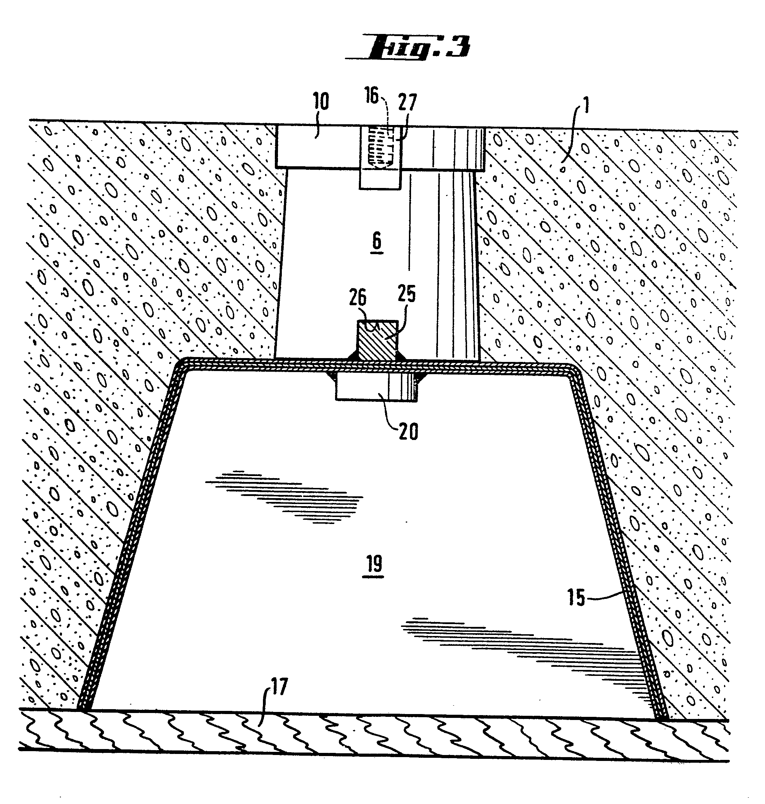

Fig. 3 den Schnitt III-III von Fig. 1 darstellt.

In einem im Ortsbeton herzustellenden Filterboden 1 eines Filterbettes sind Verbindungselemente 6 einzubetonieren, die in festen Abständen hintereinander in Längsrichtung eines ebenfalls zu betonierenden Reinwassersammelkanals aufgereiht sein sollen; von dem Kanal ist nur die Deckenschalung 17 angedeutet.

Die Verbindungselemente 6, die an sich kreisförmigen Querschnitt haben, tragen an ihrem oberen Ende einen flanschartigen Ansatz 10; in dem Ausführungsbeispiel hat dieser eine Vorzugsrichtung, da er diametral gegenüberliegende, nach außen ragende Vorsprünge 27 mit Gewindebohrungen 16 aufweist, für die relativ zur Achsrichtung des Sammelkanals eine bestimmte gleiche Lage bei allen Verbindungselementen 6 eingehalten werden muß, die beispielsweise 90° zur Längsachse des Reinwasser-Sammelkanals beträgt.

Die einzelnen Verbindungselemente 6 sind in gleichen Abständen A zueinander auf einem Schalungskörper 15, beispielsweise aus Stahl oder einem armierten schlagfesten Kunststoff, befestigt; der Schalungskörper 15 besitzt einen sich nach unten erweiternden, trapezförmigen Querschnitt, wodurch sein Herauslösen nach Erstarren des Betonbodens 1 erleichtert wird. In ihm sind zwischen den Halterungen für die Verbindungselemente 6 quer verlaufende Versteifungswände 19 angebracht. Die Halterungen für die einzelnen Verbindungselemente 6 haben in dem Schalungskörper 15, beispielsweise durch Schweißen oder Kleben, befestigte Tragbolzen 20, in die von oben ein Gewinde 21 eingeschnitten ist. Über die Tragbolzen 20 sind zylindrische oder tonnenförmige Spreizkörper 22 geschoben, deren Höhe im nicht dargestellten, unbelasteten Zustand die Höhe der Tragbolzen 20 übersteigt. Auf der ebenen Querschnittsfläche der Spreizkörper 22, die beispielsweise aus Weichgummi bestehen, liegt eine Scheibe 23 auf, die durch einen Schraubenbolzen 24, der in das Muttergewinde 21 eingreift, nach unten gezogen werden kann.

Zur präzisen Festlegung der erwähnten ausgezeichneten Vorzugsrichtung für die Gewindebohrungen 16 im Flansch 10 sind auf dem Profil des Schalungskörpers 15 zwischen den beschriebenen Halterungen für die Verbindungselemente 6 nockenartige Vorsprünge 25 in Achsrichtung des zu schaffenden Sammelkanals fluchtend hintereinander verlaufend — ebenfalls beispielsweise durch Schweißen oder Kleben — befestigt. Auf das Profil dieser Vorsprünge 25 abgestimmt sind entsprechende Nuten 26 am unteren Rand der Verbindungselemente 6 ausgespart. Beim Aufsetzen der Verbindungselemente 6 auf den Schalungskörper 15 rasten die Nuten 26 in die Nocken 25 ein und fixieren so die Verbindungselemente 6 hinsichtlich einer Rotation um ihre Achse, so daß die Gewindebohrungen 16 relativ zur Achse des Sammelkanals beispielsweise für alle Verbindungselemente 6 unter einem gleichen Winkel von 90° fixiert sind.

Für das Erstellen des Filterbodens 1 wird zunächst der Schalungskörper 15 auf der Deckenschalung 17 für den Sammelkanal fixiert. Dann werden die Verbindungselemente 6 auf die noch entspannten Spreizkörper 22 aufgereiht, wobei die Nuten 25 ineinandergreifen.

Nach dem Fixieren der Verbindungselemente 6 mit Hilfe der von den Scheiben 23 und den Schraubenbolzen 24 zusammengepreßten Spreizkörper 22 wird durch Einlegen der Armierung, Einbringen und Vibrieren des Betons der Filterboden 1 hergestellt. Nach dem Erstarren des Betons, dem Entfernen der Deckenschalung 17 und dem Lösen der Schrauben 24, läßt sich der Schalungskörper 15 nach unten herausnehmen; er kann in der beschriebenen Weise dann für das Betonieren eines weiteren Abschnittes des Filterbodens 1 verwendet werden.

Die Erfindung ist selbstverständlich nicht auf das gezeigte Ausführungsbeispiel beschränkt. Werden beispielsweise — wie in der erwähnten EP-A-19 658 beschrieben — Rohrschellen auf dem Filterboden 1 befestigt, so entfallen an den Flanschen 10 die Vorsprünge 27 mit den Gewindebohrungen 16. Die Verbindungselemente 6 sind dann rotationssymmetrisch, ohne eine Vorzugsrichtung zu haben. In diesem Falle können daher die Nocken 25 und die Nuten 26 — ebenso wie die Vorsprünge 27 — des beschriebenen Ausführungsbeispieles entfallen.

## Patentansprüche

1. Vorrichtung zum vorübergehenden Fixieren von Verbindungselementen (6) während ihres Einbetonierens in den Boden (1) eines Filterfeldes einer Filteranlage, insbesondere für die Wasseraufbereitung, wobei in dem Filterfeld als Durchgangsorgane für das gefilterte Medium Filterdüsen vorhanden sind, die in einer Anzahl Drainagerohre aufgereiht sind, die ihrerseits im Bereich des betonierten Bodens (1) des Filterfeldes mindestens annähernd parallel zueinander angeordnet und über je ein Anschlußrohr mit einem, unter dem Filterboden (1) verlegten Sammelkanal für das abzuführende Filtrat verbunden sind, gekennzeichnet durch einen auf die Deckenschalung (17) des Sammelkanals aufgesetzten, domartigen Schalungskörper (15), der in Richtung des Sammelkanals verläuft und in einem Abstand, der dem Abstand der zu verlegenden Drainagerohre entspricht, Tragbolzen (20) für einen reversibel aufweitbaren Spreizkörper (22) aufweist, ferner gekennzeichnet durch auf die Tragbolzen (20) aufgesetzte Spreizkörper (22) und durch von der Oberseite des Bodens (1) betätigbare Mittel (23, 24) zur individuellen, reversiblen Aufweitung der einzelnen Spreizkörper (22).

2. Vorrichtung nach Anspruch 1, dadurch gekennzeichnet, daß die Spreizkörper (22) aus zylinder- oder tonnenartig geformten Elastomeren bestehen und die Aufweitmittel durch Schraubenbolzen (24) und zugehörige Muttergewinde (21) gebildet sind, die die tonnenartigen Elastomere in Achsrichtung zusammenpressen.

3. Vorrichtung nach Anspruch 1 oder 2, dadurch gekennzeichnet, daß im Schalungskörper (15) quer zu seiner Längsrichtung verlaufende Versteifungswände (19) vorgesehen sind.

4. Vorrichtung nach Anspruch 1, dadurch gekennzeichnet, daß der Schalungskörper (15) zwischen den Tragbolzen (20) nockenartige Ansätze (25) trägt, die fluchtend hintereinander angeordnet sind.

## Claims

1. Means for temporarily securing connecting elements (6) while they are being concreted into the base (1) of a filter bed of a filter plant, more particularly for the preparation of water, the filter bed comprising, as elements of passage for the filtered medium, filter nozzles which are arranged in a number of drainpipes disposed at least substantially parallel to one another near the concreted filter-bed base (1), the drainpipes each being connected by way of a connecting pipe to a header duct which serves to collect the filtrate for removal and which is laid below the filter bed (1), characterised by: a dome-like shuttering member (15) which is placed on the roof shuttering (17) of the header duct, extends in the direction thereof and has, at a spacing corresponding to the spacing between the drainpipes to be laid, carrying pins (20) for a reversibly expandable expanding member (22); expanding members (22) placed on the pins (20); and means (23, 24) which serve for individual reversible expansion of the discrete expansion members (22) and which are adapted to be operated from the top of the filter bed (1).

2. Means according to claim 1, characterised in that the expanding members (22) take the form of cylindrical or barrel-shaped elastomers and the expanding means take the form of screw-threaded pins (24) and associated nuts (21) which compress the barrel-like elastomers axially.

3. Means according to claim 1 or 2, characterised in that the shuttering member (15) has stiffening walls (19) which extend transversely of the length of the member (15).

4. Means according to claim 1, characterised in that the shuttering member (15) has between the pins (20) projections (25) disposed in registration one after another.

## Revendications

1. Dispositif pour la fixation passagère d'éléments de liaison (6) pendant leur bétonnage dans le sol (1) d'un champ de filtre d'une installation de filtrage, en particulier pour la préparation d'eau, le champ de filtre comportant des éléments de passage pour le milieu filtré sous forme de buses de filtrage alignées en une pluralité de tubes de drainage qui, à leur tour, dans la zone du sol bétonné (1) du champ de filtre, sont disosés au moins approximativement en parallèle l'un à l'autre et sont reliés par un tube de raccordement respectif à un canal collecteur placé sous le sol de filtre (1), pour le filtrat à éliminer, caractérisé par un corps de coffrage (15) en forme de dôme disposé sur le coffrage de recouvrement (17) du canal collecteur et qui s'étend en direction de celuici et comporte, à une distance correspondant à la distance des tubes de drainage à placer, des boulons porteurs (20) pour un corps d'écartement réversible dilatable (22), et caractérisé en outre par un corps d'écartement (22) placé sur les boulons porteurs (20) et par des moyens (23, 24) actionnables à partir du côté supérieur du sol (1) puor la dilatation individuelle réversible des différents corps d'écartement (22).

2. Dispositif selon la revendication 1, caractérisé en ce que les corps d'écartement (22) sont en élastomère en forme de cylindre ou de tonneau et en ce que les moyens de dilatation sont constitués par des boulons à vis (24) et des taraudages associés (21) qui compriment en direction axiale les élastomères en forme de tonneau.

3. Dispositif selon la revendication 1 ou 2, caractérisé en ce que dans le corps de coffrage (15) sont prévues des parois raidisseuses (19) s'étendant transversalement par rapport à sa direction longitudinale.

4. Dispositif selon la revendication 1, caractérisé en ce que le corps de coffrage (15) porte entre les boulons porteurs (20) des appendices (25) du type ergots qui sont disposés en alignement l'un derrière l'autre.

**Fig.1**

Fig. 2

**Fig. 3**